# EUROPEAN PATENT SPECIFICATION

(11) **EP 2 588 305 B1**
(45) Date of publication and mention of the grant of the patent: **19.03.2014**
(21) Application number: 11754479.1
(22) Date of filing: 30.06.2011
(51) Int. Cl.: B32B 5/26, B32B 7/04, E04B 1/88, D03D 11/02

(54) **THERMO-ACOUSTIC BLANKET**
THERMOAKUSTISCHE DECKE
COUVERTURE THERMIQUE ET ACOUSTIQUE

(30) Priority: 01.07.2010 IT BG20100036
(43) Date of publication of application: 08.05.2013
(73) Proprietor: Promix S.r.l., 24040 Bonate Sotto (BG) (IT)
(72) Inventor: VERO, Enrico, I-24030 PONTIDA (BG) (IT)
(74) Representative: Gatti, Enrico
(86) International application number: PCT/IB2011/001543
(87) International publication number: WO 2012/001504

(56) References cited:
- EP-A2- 0 071 210
- DE-A1- 4 334 042
- GB-A- 2 282 562
- DATABASE WPI Week 197835 Thomson Scientific, London, GB; AN 1978-62733A XP002663393, & JP 53 085919 A (ISHIKAWA T) 28 July 1978 (1978-07-28)

## Description

The present invention relates to a thermoacoustic blanket, and to its production method.

The thermoacoustic blanket according to the present invention finds application in building as a thermal and acoustic insulant, in agriculture and in vegetable and flower nurseries. For example, in pitched roofs, in under-roofs, in ventilated walls, as under-flooring, false ceilings, etc.

Document GB 2 282 562 discloses an acoustic attenuating material formed by placing a stack of layers in a press. The stack comprises, a glass fibre pad which is quilted with stitching, an acoustic barrier layer of thermoplastic material, and a fire/gas resistant layer which includes for example a plastics sublayer and an aluminium sublayer sandwiching therebetween a reinforcing network of glass textile threads.

Document JP 53 085919 discloses a building panel produced by forming an artificial lightweight aggregate by granulating and hot-blowing a mixture of a silicate powder such as perlite and a foaming agent comprising a mixture of an alkali silicate, slaked lime, and/or an alkaline alum solution. The hot artificial lightweight aggregate immediately after blowing is coated with a molten thermoplastic resin, and then the coated aggregate granules are dropped onto a rigid sheet forming the backing. The surface is covered with a sheet of paper, cloth, plastics, etc to form the surface.

An object of the invention is to provide a thermoacoustic blanket of simple construction.

Another object is to provide a thermoacoustic blanket which is of low cost and easy to lay.

These and further objects are attained, according to the present invention, by a thermoacoustic blanket according to claim 1.

These objects are also attained by a method for producing a thermoacoustic blanket according to claim 10.

Further characteristics of the invention are described in the dependent claims.

The characteristics and advantages of the present invention will be apparent from the ensuing detailed description of one embodiment thereof, illustrated by way of non-limiting example in the accompanying drawings, in which:

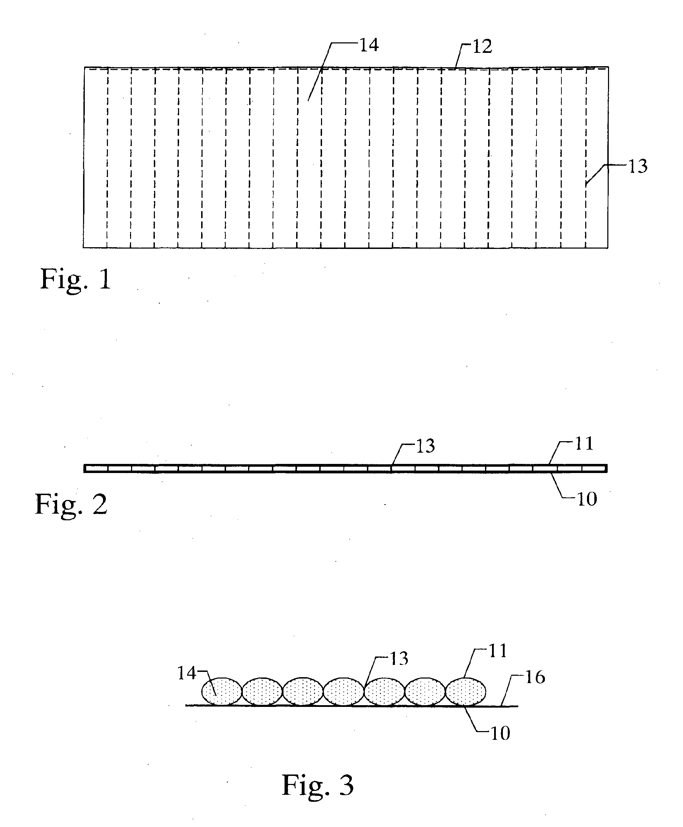

Figure 1 is a schematic view, seen from above, of a thermoacoustic blanket before filling, in accordance with the present invention;
Figure 2 is a schematic view, seen in profile, of a thermoacoustic blanket before filling, in accordance with the present invention;
Figure 3 is a schematic view, seen in section, of a thermoacoustic blanket after filling, with a sheet of impermeable fabric material below it, in accordance with the present invention;

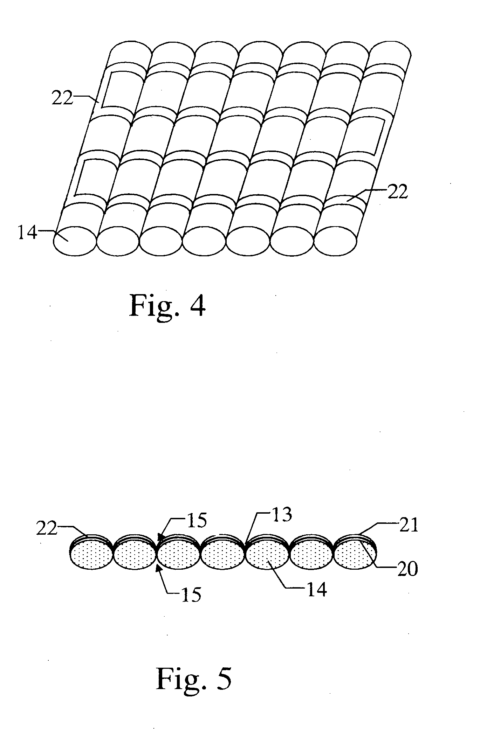

Figure 4 is a perspective schematic view of a thermoacoustic blanket after filling, without the upper layer, in accordance with the present invention;
Figure 5 is a schematic view, seen in section, of a thermoacoustic blanket after filling, in accordance with the present invention;

With reference to the accompanying figures, a thermoacoustic blanket according to the present invention comprises a first fabric layer 10 and a second fabric layer 11.

The two fabric layers 10 and 11 are joined together, preferably by a lateral stitch seam 12 along a long side of the fabric, and straight stitch seams parallel to each other and preferably equidistant, positioned transversely to the two fabric layers. These stitch seams form a plurality of tubular elements 14. The term "tubular element" denotes an article of elongated cylindrical shape, in this particular case in the form of virtually cylindrical elongated pockets positioned transversely to the length of the fabric and separated from each other by stitch seams 13.

The tubular elements 14 are separated from each other by the stitch seams 13 which form channels 15 both above and below the blanket. In this respect, a transverse space is formed, both above and below the blanket, between the stitch seam and the crest of the adjacent tubular elements. The distance between the various stitch seams is preferably between 1 and 10 cm, and more preferably between 2 and 5 cm.

The two fabric layers preferably have a width between 0.5 m and 4 m and can have any desired length.

The two fabric layers are preferably made of polyester non-woven fabric of weight 100-400 g/m².

Alternatively the two fabric layers can be fabrics of synthetic or natural origin, obtained by calendaring or weaving.

As an alternative to the stitch seams, the fabric layers 10 and 11, preferably of polyester, could be joined together to form the plurality of tubular elements 14 by thermowelding or ultrasound, or even more advantageously by forming the tubular elements and the closure of a long side directly on the loom during weaving, to form a single fabric, known by the name of double tech (double technique with tubular elements of predetermined width). The fabric can be obtained directly during weaving by interweaving weft and warp. Several equidistant tubular elements of the desired width are obtained in the weft direction.

In particular cases one or even both of the fabric layers can be impermeable (for example polythene, PVC, fabrics made impermeable by spreading, adhesive-bonding, etc.). One of the fabric layers can also be combined with an aluminium sheet of a few tenths of a millimetre thick (adhesive-bonding it with glue or by thermowelding using an intermediate polyethylene sheet). With an aluminium sheet, besides having an impermeable layer there is also a heat shield.

A thermoacoustic blanket according to the present invention can also be formed by positioning below it a sheet of impermeable fabric material 16, as a further insulant.

In an advantageous embodiment of the blanket, the upper second fabric layer 11 is formed with two superimposed layers 20 and 21, each possibly of lesser weight than the layer 11 alone. A heating tape 22 is positioned within the space created between the layers 20 and 21.

The heating tape 22 consists of a multi-layer sheath of width 12-16 mm and overall thickness 0.4 mm, in which the active element is a C-shaped (double layer) double aluminium thin film conductor, with the openings physically closed and disposed at the upper and lower end, all covered and protected by two layers of high characteristic polypropylene of 125 µm thickness.

This sheath is preferably disposed in runs in a direction perpendicular to the tubular elements of the substrate, with a distance apart suitable for obtaining the desired heating power per square metre.

The heating tape 22 is powered at low voltage (< 48 V a.c.) by connection to a unit for regulating the feed voltage and consequently the tape temperature. Temperature sensors can also be provided to control the correct operation of the tape 22.

The blanket is produced by joining the fabric layers together along only three sides leaving a long side non-stitched, for filling the tubular elements 14.

If a heated blanket is to be produced, the heating tapes and a further fabric layer are positioned. Specifically, the tape 22 is disposed on the upper layer in an arrangement depending on the power to be obtained per square metre, and the electrical connection cables are fitted. Preferably, a tape 22 redundant to the first is also fitted for use if the first is interrupted. Alternatively, the power to be obtained per square metre can be split between two tapes 22, to provide greater versatility by activating one tape or the other, to reduce the consumed power and/or to obtain at least part of the heating if one tape is interrupted.

The heating tape 22 is coupled to the upper layer 11 of the tubular element structure of the system substrate by placing it on it and then gluing a further fabric layer (or aluminium sheet) to the substrate (while still at the flat stage, before filling the tubular elements); or thermowelding a further fabric layer (or aluminium sheet) to the substrate (while still at the flat stage, before filling the tubular elements) with interposition of a polyethylene sheet.

The two non-stitched flaps of the fabric layers are then slightly moved apart and the various tubular elements which form are filled with granular material.

The granular material is preferably perlite or leca. By using expanded perlite (in its various particle sizes) or leca, a blanket of considerable quality can be obtained by virtue of its characteristics. Its characteristics of lightness, thermal and/or acoustic insulation and incombustibility give considerable advantages when used in the building industry as insulation. Alternatively if used as a foundation in agriculture or in vegetable and flower nurseries it enables a slow release water accumulation drainage system to be achieved.

Based on the characteristics to be obtained for the finished product, other natural or synthetic products can also be mixed together, for example cork, coco, waste material originating from the shredding of tyres (which enables them to be disposed of without problem, and indeed with the advantage of obtaining a high-performance blanket), etc.

The granular material is inserted into each tubular element 14 by a pipe through which by means of compressed air (or mechanically or by gravity) the material is forced into the tubular element in the required quantity, gradually moving the pipe rearwards as the tubular element is filled, to obtain the desired density according to its use.

When filling is complete the open last side is sewn (or closed by other means) to obtain a plurality of adjacent tubular elements 14, divided only by transverse stitch seams 13 and having an elliptical cross-section, i.e. a circle elongated in the longitudinal direction of the two fabric layers 10 and 11.

In one embodiment of a thermoacoustic blanket in accordance with the present invention, a polyester fabric was used, forming the tubular elements 14 directly on the loom by weft and warp weaving, known as double tech, of weight 250 g/m². The tubular elements 14 were formed with a pitch of 5 cm. The tubular elements were filled with a covered expanded perlite of particle size between 0.5 and 3 mm. In this case tubular elements are obtained having a height of 2.5 cm.

Because of its shape the blanket obtained in this manner can be stored and transported by rolling it about itself, so saving space. This also facilitates blanket installation, by unrolling it along the place of installation.

The blanket of the present invention can be fixed or coupled to other blankets or articles for other uses, or to any other element required to form thermal insulations, soundproofing, etc..

The material used for the blanket of the present invention can be in the form of particular fabrics known as felts, often used for deadening footsteps in flooring.

As these elements are coupled directly to the blanket, compared with traditional systems in which they are installed separately, there is a further lowering of installation costs.

A thermoacoustic blanket of the present invention is easily produced by preparing the two fabric layers, one of which is preferably coupled to aluminium, with a series of stitch seams as aforestated and then filling the tubular elements with the granulate, and finally closing the last side which has remained open.

By filling the blanket with perlite or leca, a single product is achieved offering all those characteristics and properties required commercially by an insulant which can otherwise only be obtained from several products together.

A product is hence obtained offering fire resistance (class A), thermal insulation, acoustic insulation, usable for reflecting, heating, as a water and vapour barrier, as a shield reflecting electromagnetic waves, and which is lightweight and easy to lay.

By virtue of its particular tubular element structure the blanket, if laid with the fabric side against walls or humid surfaces, enables good aeration with humidity migration towards the outside, while the filling with perlite or leca besides providing thermoacoustic characteristics also has the property of absorbing moisture.

If installed with the side covered by the aluminium sheet towards the outside, it provides total water and air impermeability. In summer it reflects heat outwards, and in winter it maintains the heat inside. It also acts as a reflecting shield for electromagnetic waves.

If combined with low temperature electric heating elements it can be used as floor, wall, false ceiling or curtain heating.

The same blanket, if used in agriculture and in vegetable and flower nurseries, and laid on the aluminium side (with heating elements), enables considerable accumulation of water absorbed by the perlite which acts as a slow release reservoir, while the heating serves to maintain the temperature of the root substrate under control if installed underground or as a base heater.

## Claims

1. A thermoacoustic blanket comprising a plurality of pockets filled with granular material, said pockets are formed by a lower first fabric layer (10) and an upper second fabric layer (11) which are joined together to form a plurality of tubular elements (14); an aluminium layer being associated with one chosen from said first (10) and second (11) fabric layer; **characterised in that** said tubular elements (14) are positioned side by side at a predetermined distance apart between 1 and 10 cm, and more preferably between 2 and 5 cm; said granular material comprising expanded perlite or lightweight expanded clay aggregate; a heating tape (22) positioned on said upper second layer (11), a fabric third layer then being adhesive-bonded onto said heating tape (22) and said upper second layer (11).

2. A thermoacoustic blanket as claimed in claim 1, **characterised In that** said aluminium layer Is disposed on one chosen from said first (10) and second (11) fabric layer with an interposed polyethylene layer, and is thermowelded.

3. A thermoacoustic blanket as claimed in claim 1, **characterised in that** said aluminium layer is adhesive-bonded onto one chosen from said first (10) and second (11) fabric layer.

4. A thermoacoustic blanket as claimed in claim 1, **characterised by** comprising a heating tape (22) positioned on said upper second layer (11) transversely to said plurality of tubular elements (14).

5. A thermoacoustic blanket as claimed in claim 1, **characterised in that** said first (10) and second (11) fabric layer comprise a polyester fabric with weft and warp structure.

6. A thermoacoustic blanket as claimed in claim 1, **characterised in that** said first (10) and second (11) fabric layer comprise a permeable fabric.

7. A thermoacoustic blanket as claimed in claim 1, **characterised in that** said tubular elements (14) have a length greater than or equal to 50 cm.

8. A thermoacoustic blanket as claimed in claim 1, **characterised in that** said tubular elements (14) are formed by transverse adjacent stitch seams (13) or weld seams at a predetermined distance apart through said first (10) and second (11) layer.

9. A thermoacoustic blanket as claimed in ciaim 1, **characterised in that** said tubular elements (14) are formed directly on the loom during weaving, at a predetermined distance apart.

10. A method for producing a thermoacoustic blanket comprising the steps of: joining two fabric layers (10, 11) together to form a plurality of adjacent tubular elements (14), by sewing or welding or directly on a loom during weaving; said joining (13) being transversal to said two fabric layers (10, 11), to form tubular elements (14) positioned side by side at a predetermined distance apart between 1 and 10 cm, and more preferably between 2 and 5 cm; filling said tubular elements (14) with granular material comprising expanded perlite or lightweight expended clay aggregate; associating an aluminium layer with one chosen from said first (10) and second (11) fabric layer; providing a heating tape (22) positioned on said upper second layer (11), a fabric third layer then being adhesive-bonded onto said heating tape (22) and said upper second layer (11).

## Patentansprüche

1. Thermoakustische Decke mit einer Mehrzahl von Taschen, die mit einem Granulatmaterial gefüllt sind, wobei die Taschen durch eine untere erste Gewebeschicht (10) und eine obere zweite Gewebeschicht (11) gebildet sind, die miteinander verbunden sind, um eine Mehrzahl von rohrförmigen Elementen (14) zu bilden; einer Aluminiumschicht, die mit einer der ersten (10) und zweiten (11) Gewebeschicht in Beziehung steht; **dadurch gekennzeichnet, dass** die rohrförmigen Elemente (14) mit einem vorbestimmten Abstand voneinander zwischen 1 und 10 cm, und noch bevorzugter zwischen 2 und 5 cm, seitlich nebeneinander angeordnet sind; wobei das Granulatmaterial Blähperlit oder Blähton-Leichtzuschlagstoffe enthält; ein Heizstreifen (22) auf der oberen zweiten Schicht (11) angeordnet ist, eine dritte Gewebeschicht anschließend auf den Heizstreifen (22) und die obere zweite Schicht (11) geklebt ist.

2. Thermoakustische Decke nach Anspruch 1, **dadurch gekennzeichnet, dass** die Aluminiumschicht mit einer zwischenliegenden Polyethylen-Schicht auf einer der ersten (10) und zweiten (11) Gewebeschicht angeordnet und durch Thermoschweißen verbunden ist.

3. Thermoakustische Decke nach Anspruch 1, **dadurch gekennzeichnet, dass** die Aluminiumschicht auf eine der ersten (10) und zweiten (11) Gewebeschicht aufgeklebt ist.

4. Thermoakustische Decke nach Anspruch 1, **gekennzeichnet durch** einen Heizstreifen (22), der auf der oberen zweiten Schicht (11) quer zu der Mehrzahl von rohrförmigen Elementen (14) angeordnet ist.

5. Thermoakustische Decke nach Anspruch 1, **dadurch gekennzeichnet, dass** die erste (10) und zweite (11) Gewebeschicht ein Polyestergewebe mit Schuss-und-Kette-Struktur ist.

6. Thermoakustische Decke nach Anspruch 1, **dadurch gekennzeichnet, dass** die erste (10) und zweite (11) Gewebeschicht ein durchlässiges Gewebe umfasst.

7. Thermoakustische Decke nach Anspruch 1, **dadurch gekennzeichnet, dass** die rohrförmigen Elemente (14) eine Länge haben, die größer oder gleich 50 cm ist.

8. Thermoakustische Decke nach Anspruch 1, **dadurch gekennzeichnet, dass** die rohrförmigen Elemente (14) durch querverlaufende, benachbarte Steppnähte (13) oder geschweißte Nähte mit einem vorbestimmten Abstand voneinander durch die erste (10) und zweite (11) Schicht gebildet sind.

9. Thermoakustische Decke nach Anspruch 1, **dadurch gekennzeichnet, dass** die rohrförmigen Elemente (14) direkt auf dem Webstuhl während des Webens mit einem vorbestimmten Abstand voneinander gebildet sind.

10. Verfahren zur Herstellung einer thermoakustischen Decke mit den Schritten: Verbinden von zwei Gewebeschichten (10, 11) miteinander, um eine Mehrzahl von benachbarten, rohrförmigen Elementen (14) zu bilden, und zwar durch Nähen oder Schweißen oder direkt auf einem Webstuhl während des Webens; wobei die Verbindungen (13) quer zu den beiden Gewebeschichten (10, 11) verlaufen, um rohrförmige Elemente (14) zu bilden, die mit einem vorbestimmten Abstand voneinander zwischen 1 und 10 cm, und noch bevorzugter zwischen 2 und 5 cm, seitlich nebeneinander angeordnet sind; Befüllen der rohrförmigen Elemente (14) mit Granulatmaterial, das Blähperlit oder Blähton-Leichtzuschlagstoffe enthält; Verbinden einer Aluminiumschicht mit einer der ersten (10) und zweiten (11) Gewebeschicht; Vorsehen eines Heizstreifens (22), der auf der oberen zweiten Schicht (11) angeordnet wird, wobei anschließend eine dritte Gewebeschicht auf den Heizstreifen (22) und die obere zweite Schicht (11) aufgeklebt wird.

## Revendications

1. Couverture thermique et acoustique comprenant une pluralité de poches remplies de matériau granulaire, dans laquelle lesdites poches sont formées par une première couche de tissu inférieure (10) et une deuxième couche de tissu supérieure (11) qui sont assemblées l'une avec l'autre pour former une pluralité d'éléments tubulaires (14) ; une couche d'aluminium étant associée à une couche choisie parmi lesdites première (10) et deuxième (11) couches de tissu, **caractérisée en ce que** lesdits éléments tubulaires (14) sont positionnés côte à côte espacés à une distance prédéterminée comprise entre 1 et 10 cm, et de préférence entre 2 et 5 cm ; ledit matériau granulaire comprenant de la perlite expansée ou des granulats légers en argile expansée ; un ruban chauffant (22) étant positionné sur ladite deuxième couche supérieure (11), une troisième couche de tissu étant ensuite assemblée par collage sur ledit ruban chauffant (22) et ladite deuxième couche supérieure (11).

2. Couverture thermique et acoustique selon la revendication 1, **caractérisée en ce que** ladite couche d'aluminium est disposée sur une couche choisie parmi lesdites première (10) et deuxième (11) couches de tissu avec une couche de polyéthylène intercalée, et **en ce qu'**elle est thermosoudée.

3. Couverture thermique et acoustique selon la revendication 1, **caractérisée en ce que** ladite couche d'aluminium est assemblée par collage sur une couche choisie parmi lesdites première (10) et deuxième (11) couches de tissu.

4. Couverture thermique et acoustique selon la revendication 1, **caractérisée en ce qu'**elle comprend une bande de chauffage (22) positionnée sur ladite deuxième couche supérieure (11) transversalement par rapport à ladite pluralité d'éléments tubulaires (14).

5. Couverture thermique et acoustique selon la revendication 1, **caractérisée en ce que** lesdites première (10) et deuxième (11) couches de tissu comprennent un tissu polyester avec une structure de trame et de chaîne.

6. Couverture thermique et acoustique selon la revendication 1, **caractérisée en ce que** lesdites première (10) et deuxième (11) couches de tissu comprennent un tissu perméable.

7. Couverture thermique et acoustique selon la revendication 1, **caractérisée en ce que** lesdits éléments tubulaires (14) ont une longueur supérieure ou égale à 50 cm.

8. Couverture thermique et acoustique selon la revendication 1, **caractérisée en ce que** lesdits éléments tubulaires (14) sont formés par des coutures de jonction adjacentes transversales (13) ou des cordons de soudure espacés à une distance prédéterminée à travers lesdites première (10) et deuxième (11) couches.

9. Couverture thermique et acoustique selon la revendication 1, **caractérisée en ce que** lesdits éléments tubulaires (14) sont formés directement sur le métier à tisser lors du tissage, espacés à une distance prédéterminée.

10. Procédé de fabrication d'une couverture thermique et acoustique comprenant les étapes suivantes consistant à : assembler deux couches de tissu (10, 11) ensemble pour former une pluralité d'éléments tubulaires adjacents (14), par couture ou par soudure, ou directement sur un métier à tisser lors du tissage, ledit assemblage (13) étant transversal par rapport auxdites deux couches de tissu (10, 11), pour former des éléments tubulaires (14) latéraux positionnés côte à côte espacés à une distance prédéterminée comprise entre 1 et 10 cm, et de préférence entre 2 et 5 cm ; remplir lesdits éléments tubulaires (14) avec un matériau granulaire comprenant de la perlite expansée ou des granulats légers en argile expansée ; associer une couche d'aluminium à une couche choisie parmi lesdites première (10) et deuxième (11) couches de tissu ; fournir un ruban chauffant (22) positionné sur ladite deuxième couche supérieure (11), une troisième couche de tissu étant alors assemblée par collage sur ledit ruban chauffant (22) et ladite deuxième couche supérieure (11).
